# EUROPEAN PATENT SPECIFICATION

(11) **EP 0 271 954 B1**
(45) Date of publication and mention of the grant of the patent: **02.03.1994**
(21) Application number: 87202474.0
(22) Date of filing: 10.12.1987
(51) Int. Cl.: H04N 5/20, H04N 5/21

(54) **Television signal processing apparatus including rise time normalization and noise reduction**
Vorrichtung zur Verarbeitung eines Fernsehsignals mit Steigzeitnormalisierung und Rauschminderung
Dispositif de traitement d'un signal de télévision avec normalisation du temps de montée et réduction de bruit

(30) Priority: 15.12.1986 US 941498
(43) Date of publication of application: 22.06.1988
(73) Proprietor: PHILIPS ELECTRONICS NORTH AMERICA CORPORATION, New York, N.Y. 10017 (US)
(72) Inventor: Miller, William George, NL-5656 AA Eindhoven (NL)
(74) Representative: Kooiman, Josephus Johannes Antonius

(56) References cited:
- GB-A- 2 142 204
- US-A- 4 009 334
- US-A- 4 571 511

## Description

The invention relates to a television signal processing apparatus and, more particularly, to a luminance signal processing apparatus including rise time normalization, preferably in combination with high frequency noise attenuation.

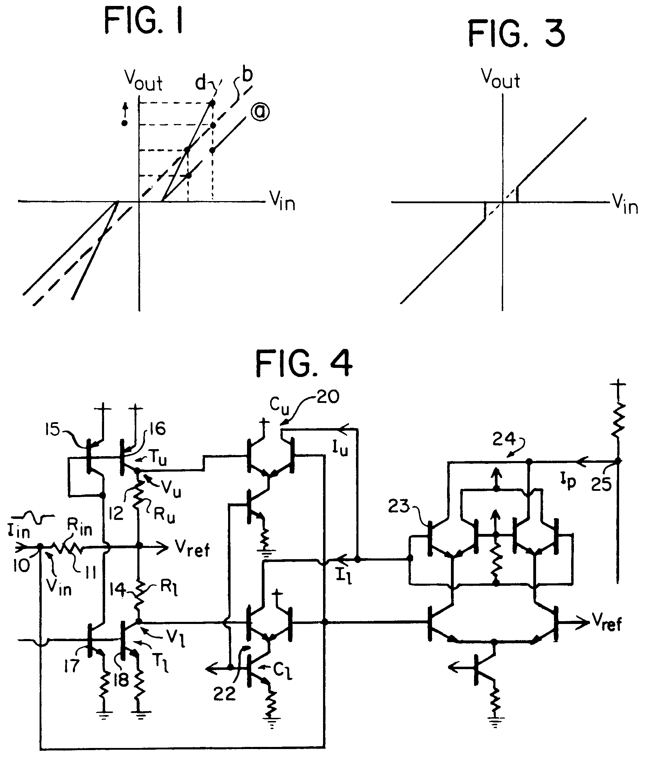

A well known technique for reducing the low level background noise in video signals is to selectively remove (or at least attenuate) high frequency, low amplitude signal components. In one type of a known television receiver luminance processor, the removal is accomplished by subtracting a fixed offset from all levels of the sharpness or peaking signal. The transfer characteristic of an amplifier used for this purpose in the known processor is illustrated in Fig. 1. In that figure, solid line a is a plot of peaking signal as a function of received signal. Dashed line b runs parallel to line a and indicates the same transfer characteristic, but without the fixed offset. The left vertical dashed line indicates the magnitude of offset, or, in other words, the amount by which the viewer must increase the sharpness or peaking signal on mid-level transitions in order to achieve the same sharpness as he would have had with a linear transfer without offset. Line d shows the transfer characteristic at this increased level. It will be noted that this characteristic results in excess peaking at high level transitions. This overpeaking is undesirable.

A further, related problem results from the fact that in presently known luminance processors, the user-selected peaking level discussed above is maintained by monitoring the maximum amplitude of the first or second derivative of the peaked luminance signal over a whole scene, and then holding this quasi-DC level constant by means of negative feedback to a gain controlled amplifier. This method works well on scenes which contain the same magnitude of maximum luminance step, e.g. test patterns. It does not yield acceptable results for the usual video picture material. If the sharpness control is initially set for a pleasing picture on "average" scene material, screens having full transitions tend to be under peaked, while those with minimal transitions (e.g. a fade to black) tend to be overpeaked and noisy.

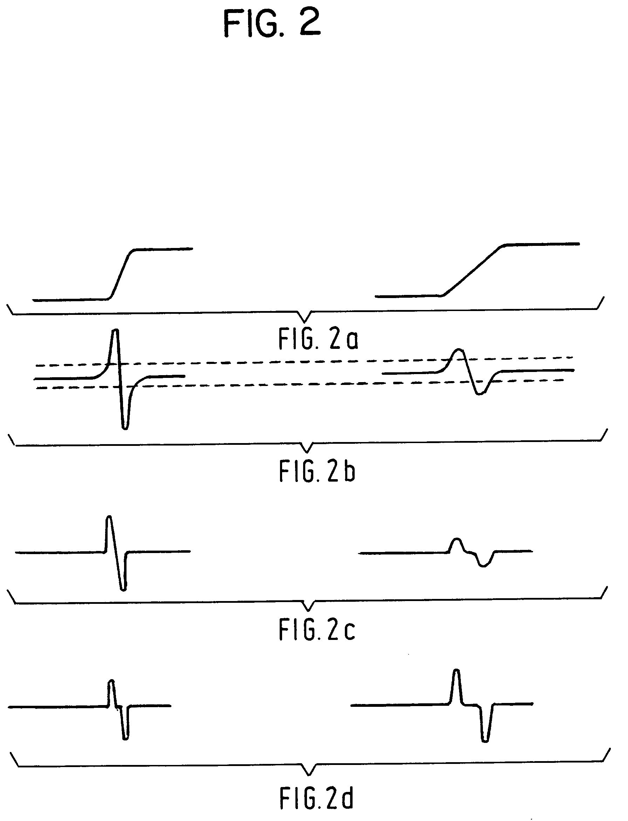

Finally, it was found that in a known television receiver, the coring and auto-sharpness circuits described above are cascade-connected with the coring circuit preceding the auto-sharpness circuit. Resulting waveforms for the case of a normal incoming video signal and a smeary incoming video signal are shown on the left-hand side of Fig. 2, and on the right-hand side of Fig. 2a, respectively. It will be noted that the smeary picture would have a peaking signal (Fig. 2b) of lower amplitude. The waveforms after coring in the respective cases are shown in Fig. 2c. It will be noted that the smeary incoming signal results in a relatively large zero output peaking signal between the positive and negative half cycles, since a fixed amplitude core has been taken out. As illustrated in Fig. 2d, the output of the known auto-sharpness circuit receiving the known coring signal illustrated in Fig. 2c would have different effective coring widths depending upon the type of signal received. The coring width for the smeary signal may well be too wide to be acceptable.

US-A-4,009,334 discloses a method and apparatus for reducing noise in a video signal, in which the low-frequency component is extracted from the video signal by filtering; the low-frequency component is then subtracted from the video signal to yield a high-frequency component; the high-frequency component is cored to remove the low-amplitude portions therefrom; and the cored high-frequency component is combined with the low-frequency component to produce a video signal having reduced noise. The document thus discloses a video noise reduction circuit comprising a coring crcuit. The coring circuit comprises an input terminal from which the input video signal is fed to a buffer. The buffer provides a current gain to the signal. Further, the input video signal is fed to a number of comparators of which the outputs actuate a switch to pass the output of the buffer in case the amplitude of the input video signal has a minimum absolute value.

It is, *inter alia,* an object of the invention to provide an apparatus for furnishing a desired television signal having substantially constant transition times independent of the amplitude of the transitions. To this end, one aspect of the invention provides an apparatus as defined in claim 1. Advantageous embodiments are defined in the subclaims.

The apparatus according to the present invention comprises circuitry which furnishes a television peaking signal with substantially constant transition times independent of the amplitude of the transitions. A signal processor including a gain controlled amplifier receives the incoming video signal which undergoes transitions having varying amplitudes and varying periods. A feedback circuit generates a gain control signal which is independent of the transition amplitude. When this gain control signal is applied to the gain controlled amplifier to control the gain thereof, the resulting video output signal is a television signal having substantially constant transition times independent of the amplitude of the transitions.

In one embodiment, a first feedback circuit generates a feedback signal which has an amplitude varying as a function of both the transition amplitudes and the transition time. A second feedback circuit generates a second feedback signal which has an amplitude independent of the transition time but varying as a function of the transition amplitude. The gain control signal is derived from the two feedback signals by subtracting the second from the first.

These and other aspects of the invention will be apparent from and elucidated with reference to the embodiments described hereinafter.

In the drawings:
Fig. 1 shows the transfer characteristic of a known coring circuit;
Fig. 2 shows waveshapes resulting from prior art incorrect connection of coring and auto-sharpness circuits;
Fig. 3 illustrates a preferred coring circuit transfer characteristic;
Fig. 4 is a schematic circuit diagram of a preferred coring circuit; and
Fig. 5 is a block diagram illustrating a luminance processor including the present invention.

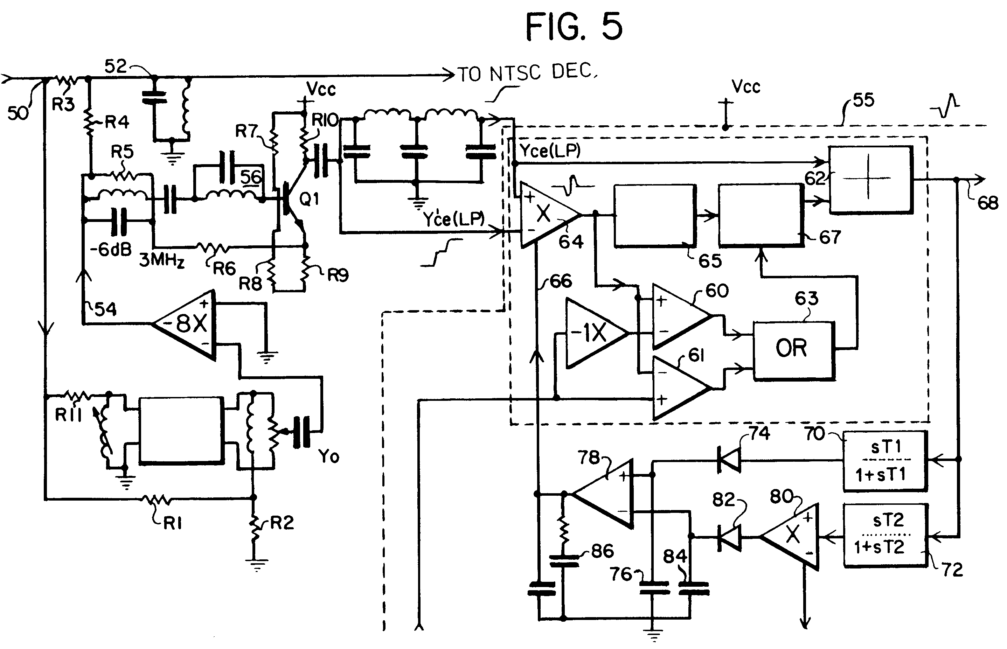

The coring or noise reduction circuit preferably used in the present invention has a transfer characteristic as illustrated in Fig. 3. It will be noted that the characteristic contains two points of inflection of each polarity and will provide, for signals exceeding some absolute value, the same as a linear transfer characteristic. This characteristic is simple to implement by use of a transmission gate, switch or amplitude modulator which blocks the peaking signal as long as the absolute value of the input signal amplitude is less than a predetermined threshold amplitude.

In the coring circuit diagram of Fig. 4, the luminance current is denoted by Iᵢₙ. It creates a potential Vᵢₙ at an input terminal 10. Terminal 10 is connected to reference potential (e.g. 1/2 Vcc volts) via a resistor 11. Two resistors, 12 and 14, have a common point connected to V_{ref}. The other ends of resistors 12 and 14, respectively, are connected to the emitter-collector circuit of a respective transistor, 16 and 18. An external coring threshold adjustment set by the viewer (see also Fig. 5, coring amount input connected to the non-inverting input of comparator 61) controls the bias applied to the respective transistor bases, directly in the case of transistor 18, and via transistors 15 and 17 connected in parallel with transistors 16 and 18 in the case of transistor 16.

Vᵢₙ is also applied to one side of a first comparator 20 and a second comparator 22. The other comparing input of comparator 20 is connected to receive the voltage Vᵤ at the collector of transistor 16. The other comparing side of comparator 22 is similarly connected to receive the voltage Vₗ at the collector of transistor 18. The comparator outputs are connected to the base of a transistor 23, which forms part of a transmission gate 24. The output of the transmission gate 24, is available at a terminal 25. As illustrated in the overall block diagram shown in Fig. 5, this output is then combined with the incoming luminance signal after optional shoot limiting. A shoot limiting circuit is not essential to an understanding of the present invention. It will therefore not be discussed here.

The above-described circuit operates as follows. User adjustment of the external coring adjustment (coring amount) changes the bias on transistor 18 and transistor 16. The current flow through the two transistors is changed, in turn, changing the voltage drop across resistors 12 and 14. Voltages Vᵤ and Vₗ change accordingly. Voltage Vᵤ is applied to one side of comparator 20, the other side of comparator 20 receiving voltage Vᵢₙ. An output current Iᵤ flows only when voltage Vᵢₙ is more positive than voltage Vᵤ. On the other hand, voltage Vₗ is applied to one side of comparator 22 whose other side also receives voltage Vᵢₙ. However, current Iₗ flows only when voltage Vᵢₙ is more negative than voltage Vₗ. All bases of the transistors constituting transmission gate 24 are balanced when current Iᵤ and current Iₗ are both zero. Either current Iₗ or current Iᵤ will bias the transmission gate to the "on" state. Since Vᵢₙ is applied to the base of transistor 23, and the collector of this transistor is connected to the input of transmission gate 24, variations in Vᵢₙ will result in corresponding variations at output 25 of transmission gate 24 as long as either current Iᵤ or a current Iₗ flows, i.e. as long as the magnitude of Vᵢₙ exceeds a predetermined threshold value. The output current signal, Iₚ, available at 25 is a peaking signal adjusted in accordance with the viewers wishes and substantially free of high frequency low amplitude noise.

The overall luminance processor including the present invention is illustrated in block diagram form in Fig. 5. In Fig. 5, the CVBS video signal input is received at a terminal 50. The chroma and luminance signals are separated by circuitry which is not part of the present invention. The chrominance signal is available at a terminal 52, while restored combed luminance signal is furnished on line 54. The luminance signal is subjected to frequency response equalization in a circuit generally denoted by reference numeral 56, and coupled through a coupling network and a peaking filter to the luminance processor. The part of the luminance processor which includes the present invention is at the right-hand side of a dashed line designated by reference numeral 55. The peaking processor receives the luminance signal and applies it directly to a summing circuit 62. In addition, it receives from external peaking filter circuitry a peaking input signal suitable for generation of a peaking signal. In the example shown in Fig. 5, it is the difference between Y_{CE(LP)} and Y'_{CE(LP)}. The peaking input signal is applied to a gain controlled amplifier 64, which receives a gain control signal on a line 66. The output of amplifier 64 is applied to two threshold comparators shown in detail in Fig. 4 and discussed above. In Fig. 5, the threshold comparators are denoted by reference numeral 60 and 61, respectively. The outputs of the threshold comparators are connected through an OR gate 63 (in Fig. 4, constituted by the connection node of the lines conveying currents Iᵤ and Iₗ, respectively) to transmission gate 67.

The output of stage 64 is also applied to a shoot limiting amplifier stage 65 (not part of this invention) whose output is applied to transmission gate 67. The output of transmission gate 67 is applied to the second input of summing stage 62. The coring circuit 60, 61, 63, shoot limiting stage 65, if any, and summing circuit 62 are referred to as additional means herein. The output signal of the summing circuit 62, denoted by reference numeral 68, is applied to a first high-pass filter 70 which has a cut-off frequency at approximately 4 MHz. It is further applied to a second high-pass filter 72 which has a cut-off frequency at approximately 250 kHz. The output of filter 70 is connected through a peak detector including a diode 74 and a capacitor 76, to the inverting input of a difference amplifier 78. The output of filter 72 is connected through a gain controlled amplifier 80 and a peek detector, consisting of a diode 82 and a capacitor 84, to the noninverting input of difference amplifier 78. The output of amplifier 78 as filtered by a capacitor 86 is applied to the control input of gain control amplifier 64.

The above described circuits operate as follows. The incoming luminance signal is applied to one summing input of summing circuit 62. In addition, the peaking signal to be added to the luminance signal is applied to the second summing input of summing stage 62 via the noise coring circuit 60, 61, 63. The operation of the latter was described in detail above and will not be repeated here. The output of the summing circuit 62 is fed back via two feedback circuits. The first feedback circuit includes high-pass filter 70. Due to its high cut-off frequency, namely 4 MHz, the output of this filter will have components which vary both as a function of the amplitude of the particular transition and the rate of change of that amplitude, i.e., the time required to accomplish the transition. On the other hand, the signal at the output of filter 72, part of the second feedback circuit, will vary substantially only as a function of the change in amplitude undergone by the signal during the transition. Following peak detection, the output of filter 70 is subtracted from that of filter 72 in difference amplifier 78. The gain control signal at the output of difference amplifier 78 is thus a signal which varies as a function of the time required to accomplish the transition, independent of transition amplitude. Since the feedback loop will tend to keep this signal constant, the time required for the transition, i.e. the rise or fall time of the peaked luminance signal at the output of circuit 62, will be substantially independent of the change in amplitude involved.

It should also be noted that gain controlled amplifier 64 precedes the coring circuit 60, 61, 63 in the signal processing chain. This sequence of operation thus minimizes the possibly excessive coring width which would result if it were to be connected after the coring stage.

Although the invention has been illustrated in a particular preferred embodiment, it is not intended to be limited thereto. Many variations in operation and construction will readily occur to one skilled in the art and are intended to be encompassed in the scope of the invention, as claimed in the following claims.

## Claims

1. Apparatus for furnishing a desired television signal having substantially constant transition times independent of the amplitude of said transitions, comprising:
gain controlled amplifying means (64) for receiving and amplifying an input signal undergoing transitions having varying transition amplitudes and varying transition times, and furnishing an amplified video signal in response thereto;
additional means (60-63, 65, 67) coupled to said gain controlled amplifying means (64) for furnishing said desired television signal in dependence on said amplified video signal;
feedback means (70, 72, 78) coupled to said additional means (60-63, 65, 67) for generating a gain control signal having an amplitude varying only as a function of said transition times; and
means (66) for applying said gain control signal to said gain controlled amplifying means (64) to control the gain thereof.

2. Apparatus as set forth in claim 1, wherein said feedback means (70, 72, 78) comprises:
first feedback means (70) coupled to said additional means (60-63, 65, 67) for generating a first feedback signal having an amplitude varying as a function of said transition amplitudes and of said transition times;
second feedback means (72) coupled to said additional means (60-63, 65, 67) for generating a second feedback signal having an amplitude independent of said transition time but varying as a function of said transition amplitude; and
combining means (78) coupled to said first (70) and second (72) feedback means to generate said gain control signal.

3. Apparatus as set forth in claim 2, wherein said first feedback means (70) comprise first high-pass filter means having a cut-off frequency above 4 MHz.

4. Apparatus as set forth in claim 2, wherein said second feedback means (72) comprise second high-pass filter means having a cut-off frequency at approximately 250 kHz.

5. Apparatus as set forth in claim 2, wherein said combining means (78) comprise differential amplifier means.

6. Apparatus as set forth in claim 2, further comprising first peak detector means (74, 76) interconnected between said first feedback means (70) and said combining means (78).

7. Apparatus as set forth in claim 2, further comprising second peak detector means (82, 84) interconnected between said second feedback means (72) and said combining means (78).

8. Apparatus as set forth in claim 1, wherein said additional means (60-63, 65, 67) comprise summing means (62) having a first input coupled to receive said input signal, a second input, and a summing circuit output, and signal processing means (60, 61, 63, 65, 67) interconnected between said gain controlled amplifying means (64) and said second input.

9. Apparatus as set forth in claim 1, wherein said additional means (60-63, 65, 67) comprise nonlinear coring means (60, 61, 63) coupled to said gain controlled amplifying means (64) for generating a signal having decreased high frequency noise in response to said amplified video signal.

## Patentansprüche

1. Schaltungsanordnung zum Liefern eines erwünschten Fernsehsignals mit nahezu konstanten Übergangszeiten unabhängig von der Amplitude der genannten Übergänge, mit:
verstärkungsgeregelten Verstärkermitteln (64) zum Empfangen und Verstärkern eines Eingangssignals, das Übergänge mit veriierenden Übergangsamplituden und variierenden Übergangszeiten erfährt, und zum Liefern eines verstärkten Video-Signals in Antwort daraus;
zusätzlichen Mitteln (60-63, 65, 67), die mit den genannten verstärkungsgeregelten Verstärkungsmitteln (64) gekoppelt sind zum Liefern des genannten erwünschten Fernsesignals in Abhängigkeit von dem genannten verstärkten Video-Signal;
Rückkopplungsmitteln (70, 72, 78), die mit den genannten zusätzlichen Mitteln (60-63, 65, 67) gekoppelt sind zum Erzeugen eines Verstärkungsregelsignal mit einer Amplitude, die nur als Funktion der genannten Übergangszeiten variiert; und
Mitteln (66) zum Zuführen des genannten Verstärkungsregelsignal zu den genannten verstärkungsgeregelten Verstärkungsmitteln (64) zur Regelung der Verstärkung derselben.

2. Schaltungsanordnung nach Anspruch 1, wobei die genannten Rückkoplungsmittel (70, 72, 78) die nachfolgenden Elemente aufweisen:
erste Rückkopplungsmittel (70), die mit den zusätzlichen Mitteln (60-63, 65, 67) gekoppelt sind zum Erzeugen eines ersten Rückkopplungssignals mit einer Amplitude, die als Funktion der genannten Übergangsamplituden und der genannten Übergangszeiten variiert;
zweite Rückkopplungsmittel (72), die mit den zusätzlichen Mitteln (60-63, 65, 67) gekoppelt sind zum Erzeugen eines zweiten Rückkopplungssignals mit einer Amplitude, die unabhängig ist von der genannten Übergangszeit, aber als Funktion der genannten Übergangsamplitude variiert; und
Kombinierungsmittel (78), die mit den genannten ersten (70) und zweiten Rückkopplungsmitteln gekoppelt sind zum Erzeugen des genannten Verstärkungsregelsignals.

3. Schaltungsanordnung nach Anspruch 2, wobei die genannten ersten Rückkopplungsmittel (70) erste Hochpaßfiltermittel mit einer Grenzfrequenz über 4 MHz aufweisen.

4. Schaltungsanordnung nach Anspruch 2, wobei die genannten zweiten Rückkopplungsmittel (72) zweite Hochpaßfiltermittel mit einer Grenzfrequenz bei etwa 250 kHz aufweisen.

5. Schaltungsanordnung nach Anspruch 2, wobei die genannten Kombinierungsmittel (78) Differenzverstärkungsmittel aufweisen.

6. Schaltungsanordnung nach Anspruch 2, weiterhin mit ersten Spitzendetektormitteln (74, 76), die zwischen den genannten ersten Rückkopplungsmitteln (70) und den genannten Kombinierungsmitteln (78) vorgesehen sind.

7. Schaltungsanordnung nach Anspruch 2, weiterhin mit zweiten Spitzendetektormitteln (82, 84), die zwischen den zweiten Rückkopplungsmitteln (72) und den genannten Kombinierungsmitteln (78) vorgesehen sind.

8. Schaltungsanordnung nach Anspruch 1, wobei die genannten zusätzlichen Mittel (60-63, 65, 67) Summiermittel (62) aufweisen mit einem ersten Eingang zum Empfangen des genannten Eingangssignals, mit einem zweiten Eingang und mit einem Summierschaltungsausgang, und Signalverarbeitungsmittel (60, 61, 63, 65, 67) zwischen den genannten verstärkungsgeregelten Verstärkungsmitteln (64) und dem genannten zweiten Eingang.

9. Schaltungsanordnung nach Anspruch 1, wobei die genannten zusätzlichen Mittel (60-63, 65, 67) nicht-lineare "Coring"-Mittel (60, 61, 63) aufweisen, die mit den genannten verstärkungsgeregelten Verstärkungsmitteln (64) gekoppelt sind zum Erzeugen eines Signals mit vermindertem HF-Rauschen in Antwort auf das genannte verstärkte Video-Signal.

## Revendications

1. Dispositif pour fournir un signal de télévision souhaité ayant des temps de transition sensiblement constants indépendants de l'amplitude desdites transitions, comprenant :
des moyens d'amplification à gain contrôlé (64) pour recevoir et amplifier un signal d'entrée subissant des transitions ayant des amplitudes de transition variables et des temps de transition variables, et pour fournir un signal vidéo amplifié en réponse,
des moyens additionnels (60-63, 65, 67) couplés auxdits moyens d'amplification à gain contrôlé (64) pour fournir ledit signal de télévision souhaité en fonction dudit signal vidéo amplifié,
des moyens de rétroaction (70, 72, 78) couplés auxdits moyens additionnels (60-63, 65, 67) pour produire un signal de contrôle de gain ayant une amplitude ne variant qu'en fonction desdits temps de transition, et
des moyens (66) pour appliquer ledit signal de contrôle de gain auxdits moyens d'amplification à gain contrôlé (64) pour en contrôler le gain.

2. Dispositif selon la revendication 1, dans lequel lesdits moyens de rétroaction (70, 72, 78) comprennent :
un premier moyen de rétroaction (70) couplé auxdits moyens additionnels (60-63, 65, 67) pour produire un premier signal de rétroaction ayant une amplitude variant en fonction desdites amplitudes de transition et desdits temps de transition,
un deuxième moyen de rétroaction (72) couplé auxdits moyens additionnels (60-63, 65, 67) pour produire un deuxième signal de rétroaction ayant une amplitude indépendante dudit temps de transition, mais variant en fonction de ladite amplitude de transition, et
des moyens de combinaison (78) couplés auxdits premier (70) et deuxième (72) moyens de rétroaction pour produire ledit signal de contrôle de gain.

3. Dispositif selon la revendication 2, dans lequel les premiers moyens de rétroaction (70) comprennent un premier moyen de filtrage passe-haut ayant une fréquence de coupure supérieure à 4 MHz.

4. Dispositif selon la revendication 2, dans lequel les deuxièmes moyens de rétroaction (72) comprennent un deuxième moyen de filtrage passe-haut ayant une fréquence de coupure d'environ 250 kHz.

5. Dispositif selon la revendication 2, dans lequel les moyens de combinaison (78) comprennent des moyens d'amplification différentiels.

6. Dispositif selon la revendication 2, comprenant par ailleurs un premier moyen de détection de crête (74, 76) interconnecté entre les premiers moyens de rétroaction (70) et les moyens de combinaison (78).

7. Dispositif selon la revendication 2, comprenant par ailleurs un deuxième moyen de détection de crête (82, 84) interconnecté entre les deuxièmes moyens de rétroaction (72) et lesdits moyens de combinaison (78).

8. Dispositif selon la revendication 1, dans lequel lesdits moyens additionnels (60-63, 65, 67) comprennent un moyen sommateur (62) ayant une première entrée couplée pour recevoir ledit signal d'entrée, une deuxième entrée et une sortie du circuit sommateur ainsi que des moyens de traitement de signaux (60, 61, 63, 65, 67) interconnectés entre lesdits moyens d'amplification à gain contrôlé (64) et ladite deuxième entrée.

9. Dispositif selon la revendication 1, dans lequel lesdits moyens additionnels (60-63, 65, 67) comprennent des moyens d'extraction non linéaires (60, 61, 63) couplés audit moyen d'amplification à gain contrôlé (64) pour produire un signal ayant un bruit haute fréquence réduit en réponse audit signal vidéo amplifié.
